# EUROPEAN PATENT SPECIFICATION

(11) **EP 0 343 982 B1**
(45) Date of publication and mention of the grant of the patent: **03.05.1995**
(21) Application number: 89305292.8
(22) Date of filing: 25.05.1989
(51) Int. Cl.: G11B 17/02, G11B 17/04, G11B 19/02, G11B 19/20, G11B 25/04

(54) **Apparatus for recording and/or reproducing information**
Gerät zur Aufzeichnung und/oder Wiedergabe von Information
Appareil pour enregistrer et/ou reproduire des informations

(30) Priority: 25.05.1988 JP 128006/88; 22.05.1989 JP 129289/89
(43) Date of publication of application: 29.11.1989
(73) Proprietor: CANON KABUSHIKI KAISHA, Tokyo (JP)
(72) Inventor: Suzuki, Kazunori, Yokohama-shi Kanagawa-ken (JP); Kanda, Shigeto, Machida-shi Tokyo (JP); Hiroki, Tomoyuki, Kamakura-shi Kanagawa-ken (JP); Hosoya, Hideki, Kawasaki-shi Kanagawa-ken (JP)
(74) Representative: Beresford, Keith Denis Lewis

(56) References cited:
- EP-A- 0 230 069
- EP-A- 0 292 720
- WO-A-86/05620
- PATENT ABSTRACTS OF JAPAN vol. 9, no. 195 (P-379)(1918) 13 August 1985,& JP-A-60 061952 (FUJIYA KOUGEI K.K.) 09 April 1985,
- PATENT ABSTRACTS OF JAPAN vol. 10, no. 15 (P-422)(2072) 21 January 1986,& JP-A-60 170067 (MATSUSHITA DENKI SANGYO KABUSHIKI KAISHA) 03 September 1985,
- PATENT ABSTRACTS OF JAPAN vol. 11, no. 15 (P-536)(2462) 16 January 1987,& JP-A-61 190721 (COMPUT SERVICES CORP) 25 August 1986,

## Description

### BACKGROUND OF THE INVENTION

### Field of the Invention

The present invention relates to an ejecting mechanism of an information recording medium in, for instance, an optical information recording and/or reproducing apparatus for recording and/or reproducing information by using an information recording medium having, for instance, a rectangular shape other than a circular shape.

### Related Background Art

Hitherto, a read only compact disc, a write once and read mostly (WORM) type optical disk, and the like have been known as optical information recording media. The study, development, and realization of an information processing system such as an electronic file system or the like using those recording media are being executed more and more. Further, in recent years, an information processing system using a card-shaped optical recording medium which is superior to the disk-shaped recording medium in terms of portability, i.e., what is called an optical card has been also highlighted.

For instance, an optical recording medium in which concentric or spiral information tracks are formed on the surface of a rectangular card has been disclosed in Japanese Kokai 62-264458. An information recording and reproducing apparatus using such a medium has been disclosed in Japanese Kokai 63-31084.

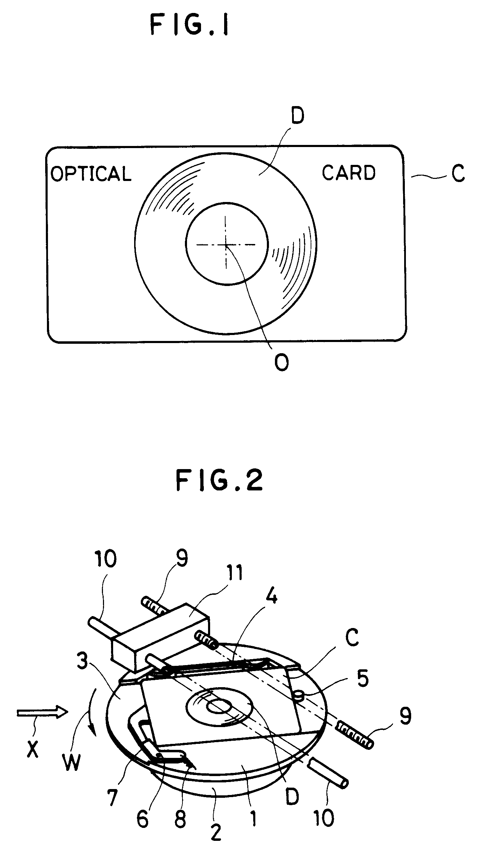

Fig. 1 is a plan view of an optical card C having an almost rectangular card shape. Although the size of optical card C is not particularly limited, it is preferably set into a size such that the card can be enclosed in a pocket, purse, or the like and in the case of carrying the card, it does not become too large nor small. For instance, the size is set into approximately 85.6 mm x 54.0 mm. In Fig. 1, a circular recording area D in which a center position O of the optical card C is used as a center is formed on the surface of the optical card C. A number of concentric or spiral information tracks are arranged in the recording area D.

Fig. 2 is a perspective view of an optical information reproducing apparatus for reproducing information by rotating the optical card C. In Fig. 2, a turntable 1 onto which the optical card C is put is rotated by a spindle motor 2 attached below the turntable 1. A guide groove 3 having a width which is fairly larger than a length of short side of the optical card C is formed on the upper surface of the turntable 1. A leaf spring 4 is attached to one wall of the guide groove 3. When the optical card C is put on the guide groove 3, the card is pressed to the other wall of the guide groove 3 by the leaf spring 4. On the other hand, a pin-shaped stopper 5 is provided at one end of the guide groove 3. A lever 7 is rotatably attached at the other end of the guide groove 3 at a position around a pin 6 provided in the outside of the guide groove 3 on the turntable 1. One end of a coil spring 8 is attached to the turntable 1. The other end of the coil spring 8 is connected to the lever 7. The operational edge of the lever 7 presses the optical card C on the guide groove 3 to the stopper 5 by the tensile force of the coil spring 8.

The insertion and ejection of the optical card C into and from the turntable 1 are executed in a state in which the lever 7 is rotated around the pin 6 against the tensile force of the coil spring 8 and the operational edge of the lever 7 is moved out of the guide groove 3. The optical card C is inserted in the direction of an arrow X in the guide groove 3 and is moved to a position where the front edge of the card abuts on the stopper 5 while being pressed to the wall on the opposite side by the leaf spring 4. Thereafter, the lever 7 is come into contact with the card C and the card is fixed. In a state in which the optical card C is fixed by the leaf spring 4 and lever 7, the center position O of the recording area D is located onto the axial center of the rotating shaft of the spindle motor 2.

On the other hand, a feed screw 9 and a guide rail 10 are attached in parallel in the horizontal direction over the turntable 1. An optical head 11 is movably mounted to the feed screw 9 and guide rail 10. A female screw which is come into engagement with the feed screw 9 is provided in the optical head 11. The optical head 11 is slidably attached to the guide rail 10. When the feed screw 9 is rotated by a drive motor (not shown), the optical head 11 is moved along the guide rail 10 and accesses the recording area D on the optical card C which is rotated by the spindle motor 2 in the direction of an arrow W, so that the recorded information can be reproduced.

In the foregoing example, the optical card C is ejected out in a state in which the operational edge of the lever 7 is moved out of the guide groove 3 as mentioned above. However, in the case of automatically ejecting out the optical card C, the direction of the guide groove 3 needs to be accurately made coincide with the ejecting conveying direction of the optical card C. If the matching accuracy in this case is low, not only a conveyance error occurs but also there is a danger such that the optical card C itself will be damaged.

On the other hand, in recent optical cards, there have been proposed many optical cards on each of which a mark such as characters, photograph, or the like is printed so that the operator can check the content of the optical card by the eyes. In the case of using such an optical card, it is a natural operation for the operator that the optical card is inserted into the information recording and/or reproducing apparatus in a state in which the mark such as characters, photograph, or the line printed on the optical card is directed in such a direction as to be easily read by the operator and the card is ejected out in the same state as above. Further, such a method is also convenient upon operation. However, the above information recording and/or reproducing apparatus does not have means for accurately directing the optical card in the ejecting direction, so that such an operation cannot be executed and it is inconvenient.

European Patent Specification EP-A-230069 discloses an information recording/reproduction system using a card-like recording member but makes no mention of ensuring that the recording member is correctly aligned in the discharge direction. Similarly, European Patent Specification EP-A-229720 has an earlier priority date than the present application and its contents are accordingly, pursuant to Articles 54(3) and (4) EPC, comprised in the state of the art relative to the present invention. However it can be seen that this specification utilises physical means for stopping the rotation of the recording medium in order to try and ensure that it is correctly aligned for discharge.

Accordingly the present invention is concerned with providing an information recording and/or reproducing apparatus having an ejecting mechanism for an information recording medium in which by providing means for accurately directing the information recording medium in the ejection direction, the information recording medium can be ejected without damage.

According to one aspect the present invention provides information recording apparatus as set out in claim 1.

According to a second aspect the present invention provides information reproducing apparatus as set out in claim 2.

According to a third aspect the present invention provides information recording/reproducing apparatus as set out in claim 3.

In order that the present invention may be more readily understood, embodiments thereof will now be described by way of example and with reference to the accompanying drawings in which:
Fig. 1 is a plan view of an optical card;
Fig. 2 is a perspective view of a conventional information recording and/or reproducing apparatus;
Fig. 3 is a plan view of a first embodiment;
Fig. 4 is an explanatory diagram in the case where an optical card C is ejected out in an inclined state;
Fig. 5 is an explanatory diagram when the optical card is ejected out;
Fig. 6 is a plan view of a second embodiment;
Fig. 7 is a plan view of a rotary encoder;
Fig. 8 is an explanatory diagram of output pulses;
Fig. 9 is a cross sectional view of the third embodiment;
Fig. 10 is a constructional view of a fourth embodiment;
Fig. 11 is a plan view of a fourth embodiment;
Figs. 12A to 12C are explanatory diagrams of outputs of photosensors;
Fig. 13 is a flowchart for the fourth embodiment;
Fig. 14 is a constructional view of a fifth embodiment;
Fig. 15 is a flowchart of the fifth embodiment; and
Fig. 16 is a plan view of the sixth embodiment.

### DETAILED DESCRIPTION OF THE PREFERRED EMBODIMENTS

The present invention will be described in detail hereinbelow on the basis of an embodiment shown in the drawings.

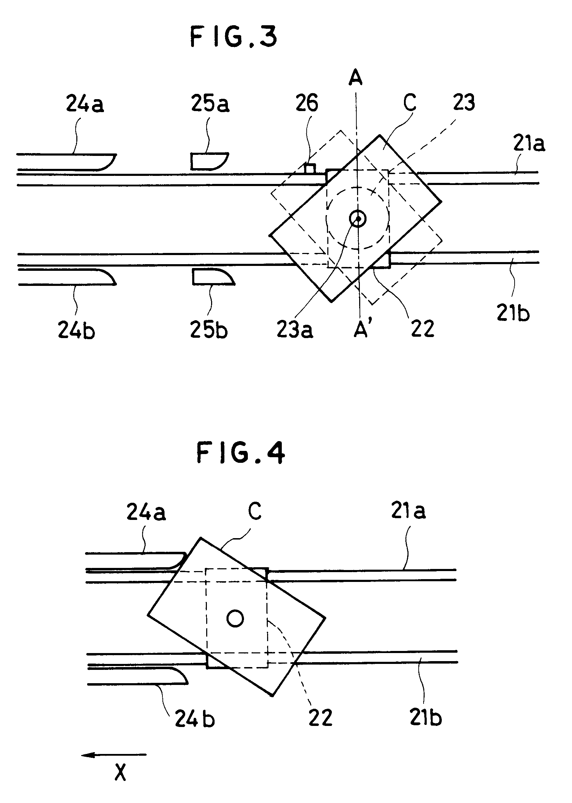

Fig. 3 shows the first embodiment. A conveying base plate 22 is slidably mounted to two parallel rails 21a and 21b whose both ends are fixed to the main body of an information recording and/or reproducing apparatus. The conveying base plate 22 can be reciprocated by a linear motor (not shown) in the region from an optical card inserting/ejecting port of the apparatus on the left side in the drawing to a position A - A′ to record and/or reproduce information by an optical head (not shown). A turntable 23 onto which the optical card C is put and a spindle motor (not shown) to rotate the turntable 23 are mounted on the base plate 22. An outer diameter of the turntable 23 is smaller than a length of short side of the optical card C. The optical card C is set so that the center position O of the optical card C is located on the axial center of a center shaft 23a of the turntable 23. The optical card C is then fixed by a clamper from the upper position. An interval between the rails 21a and 21b including the widths of the rails themselves is set to be almost equal to the length of the short side of the optical card C. Fixed guides 24a and 24b are arranged on both outsides of the rails 21a and 21b near the inserting/ejecting port of the optical card C with an interval which is slightly wider than the length of the short side of the optical card C. Further, two auxiliary guides 25a and 25b are arranged on the insides along the rails 21a and 21b so as to face each other. The auxiliary guides 25a and 25b can move in the upper and lower directions, that is, in the directions perpendicular to the surface of the drawing paper. Namely, the guides 25a and 25b can move in the directions which are perpendicular to the surface of the recording medium on the optical card C. The guides 25a and 25b have the side portions which are parallel with the rails 21a and 21b and also have guide portions whose inward sides are arc-shaped. On the other hand, the rotation of the turntable 23 is stopped at the position A - A′ where information is recorded and/or reproduced onto/from the optical card C and the direction of the optical card C, that is, the rotating position of the optical card is detected by a sensor 26. The sensor 26 is arranged on the outside of the rail 21a and at a position where the distance form the turntable center shaft 23a is shorter than the length which is 1/2 of the length of the long side of the optical card C. The sensor 26 comprises a photo reflector, photo interruptor, or the like and detects whether the optical card C exists over the sensor 26 or not when the rotation of the turntable 23 is stopped. In other words, the sensor 26 detects the direction, an angular position of the optical card C on the turntable 23.

On the other hand, a detection output of the sensor 26 is supplied to a drive control unit of the auxiliary guides 25a and 25b. In accordance with the output of the sensor 26, the guide 25a or 25b is selectively driven in the vertical direction. The sensor 26 can be also attached over the conveying base plate 22 without fixing to the apparatus main body.

In the above construction, when loading, the optical card C inserted from the optical card inserting port is set onto the turntable 23 and is moved to the operational position A - A′ of the optical head while the rotation of the card is restricted by the fixed guides 24a and 24b and the auxiliary guides 25a and 25b. After completion of the information recording and/or reproducing operation of the optical card C at the position A - A′, the rotation of the turntable 23 is stopped by the stop of the rotation of the spindle motor. Thereafter, the conveying base plate 22 starts moving in the direction (X direction in the diagram) of the optical card ejecting port along the rails 21a and 21b. In this case, the long side of the optical card C is not always parallel with the rails 21a and 21b. In most of the cases, as shown in Fig. 4, the long side of the optical card C is directed obliquely to the rails 21a and 21b. Therefore, in such a state, the optical card C cannot pass through the region between the fixed guides 24a and 24b.

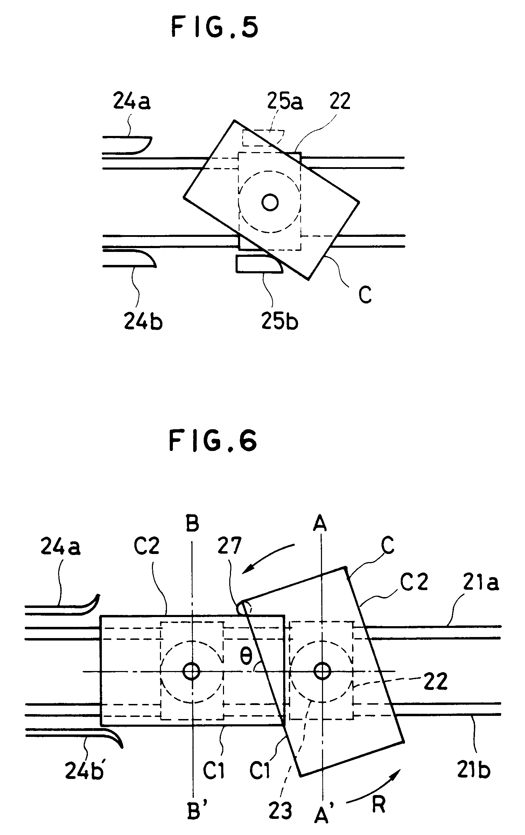

Therefore, in the embodiment, the direction of the optical card C is detected by the sensor 26 when the turntable 23 stops. If the optical card C exists over the sensor 26, the auxiliary guide 25a is put down. Next, by stopping the current supply to the clamper and/or spindle motor of the optical card C, the optical card C is set into the freely rotatable state. Then, the movement of the conveying base plate 22 is started. Thus, as shown in Fig. 5, the long side portion of the optical card C is rotated in contact relation with the auxiliary guide 25b and is adjusted to the direction parallel with the rails 21a and 21b. Then, the optical card C is led to the region between the fixed guides 24a and 24b. On the contrarily, if the optical card C does not exist over the sensor 26, by putting down the auxiliary guide 25b contrarily, the similar direction control can be executed.

Fig. 6 shows the second embodiment and the same parts and components as those shown in Fig. 3 are designated by the same reference numerals. In Fig. 6, a fixed guide 24b′ is slightly longer on the inner side than the opposite fixed guide 24a. The edge portion of the fixed guide 24b′ serves as a curved guide portion. On the other hand, a sensor 27 is arranged at a position where the distance from the center shaft 23a of the turntable 23 in the outside portion of the rail 21a is slightly shorter than 1/2 of the length of the long side of the optical card C when the optical card C rotates in the direction of an arrow R at the operational position A - A′ of the optical head. The sensor 27 comprises a photo interruptor in which an LED and a phototransistor are arranged so as to face each other. The optical card C as a light shielding object passes through the region between the LED and the phototransistor. The sensor 27 can detect the passage of long side portions C₁ and C₂ of the rotating optical card C. A detection output of the sensor 27 is input to a control unit using a linear motor to drive the conveying base plate 22.

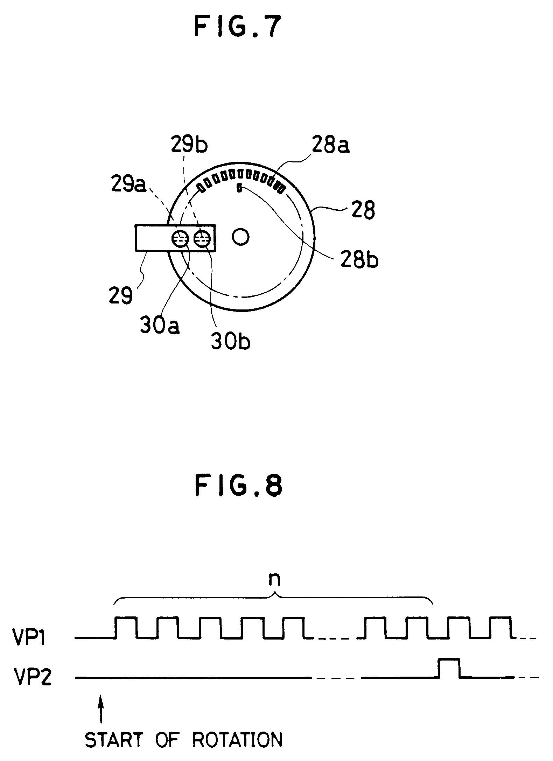

Fig. 7 shows an optical rotary encoder which is used in the second embodiment. The rotary encoder is attached to the spindle motor to rotate the turntable onto which the optical card C is put. The rotary encoder comprises: a slit plate 28 which is attached to the center shaft 23a of the turntable 23 and is rotated; and a photo interruptor 29 attached to a fixed portion of the spindle motor. A slit 28a having 360 windows per circumference is formed in the outer peripheral portion of the slit plate 28. A slit 28b having one window per circumference is arranged in the inner peripheral portion of the slit plate 28. On the other hand, a first LED (not shown) and a first phototransistor 30a are arranged so as to face the photo interruptor 29 through a fixed slit 29a. A second LED (not shown) and a second phototransistor 30b are arranged so as to face the photo interruptor 29 through a fixed slit 29b. The fixed slits 29a and 29b are arranged so as to face the slits 28a and 28b of the slit plate 28. Outputs of the first and second phototransistors 30a and 30b are input to the control unit of the linear motor to drive the conveying base plate 22.

In the above construction, upon loading, the optical card C is moved in parallel to the operational position by the operation similar to that in the first embodiment and starts rotating in the direction of the arrow R. When the turntable 23 rotates, 360 pulses are output per revolution from the first phototransistor 30a by the light fluxes which passed through the slit plate 28 and one pulse is output per revolution from the second phototransistor 30b. Fig. 8 shows output pulses VP₁ and VP₂ of the first and second phototransistors 30a and 30b of the photo interruptor 29. When n pulses VP₁ are output from the start time point of the revolution, the optical card C has rotated n degrees until the time point of the generation of the n-th pulse. A numerical value of the pulses VP₁ detected is sent to the control unit of the linear motor. Thereafter, information is recorded and/or reproduced while rotating the optical card C at an angular velocity of, for instance, 1000 r.p.m.

In the operation upon ejecting, assuming that the angles between the rails 21a and 21b and the long side portions C₁ and C₂ of the optical card C at the time point when the sensor 27 detects the passage of the long side portions C₁ and C₂ of the optical card C is set to ϑ, the time point when the sensor 27 detects the long side portion C₁ which was on the right hand side during inserting movement of the optical card C coincides with the time point when the optical card C has rotated by only the rotational angle of (360 - n - ϑ)° after completion of the generation of each pulse VP₂, that is, the time point when (360 - n - ϑ) pulses VP₁ were output. If n equals 90° and ϑ equals 45°, sensor 27 will detect side C₁ at 225 pulses of VP₁ after VP₂. Therefore in this case, the angular velocity of the optical card C is first reduced to 60 r.p.m. and the output of the sensor 27 is made effective within only the period of time when the 200th to 250th pulses VP₁ are output after the pulse VP₂ was output. From the time point when the effective output of the sensor 27 was obtained, the control unit of the linear motor starts moving the conveying base plate 22 in parallel.

In Fig. 6, it is now assumed that the position where the distance until the fixed guide 24b′ is slightly shorter than 1/2 of the length of the long side of the optical card C is set to B - B′. By setting the moving speed of the conveying base plate 22 so that the base plate 22 reaches the position B - B′ after the elapse of ϑ/360 second after the base plate had started the parallel movement, the long side portion C₁ of the optical card C contacts with the fixed guide 24b′ at the time point when the long side portion C₁ becomes parallel with the rails 21a and 21b. Therefore, the optical card C is led to the region between the fixed guides 24a and 24b′ while a degree of freedom in the rotating direction is restricted. Then, the card is ejected out in a state in which its direction is the same as that upon insertion. After the optical card C was come into contact with the fixed guide 24b′, the current supply to the clamper and/or spindle motor of the optical card C is stopped.

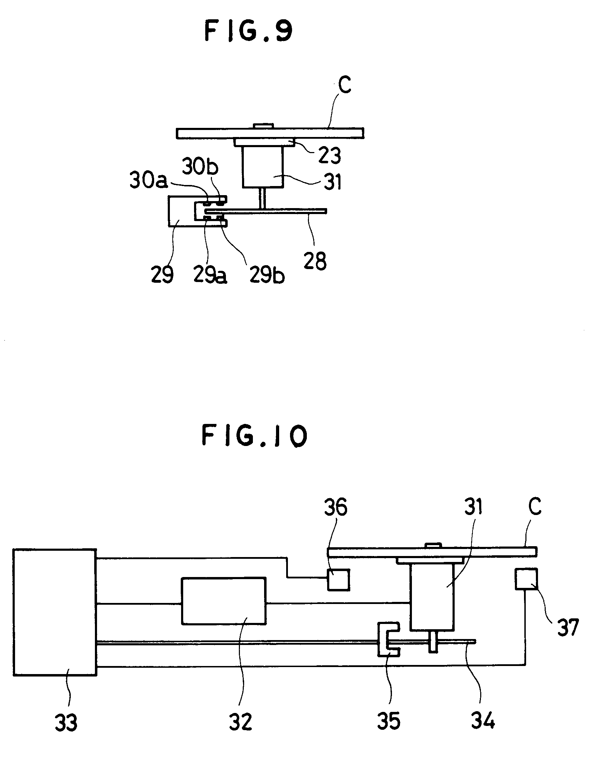

Fig. 9 shows the third embodiment. In a manner similar to the second embodiment, a rotary encoder is attached to a spindle motor 31 to rotate the optical card C. The rotary encoder comprises: the slit plate 28 which is attached to a center shaft of the spindle motor 31 and is rotated; and the photo interruptor 29 attached to a fixed portion of the spindle motor 31. As shown in Fig. 8, the slit 28a having, for instance, 360 windows per circumference is formed in the outer peripheral portion of the slit plate 28. The slit 28b having one window per circumference is formed in the inner peripheral portion of the slit plate 28. On the other hand, the first LED (not shown) and the first phototransistor 30a are arranged so as to face the photo interruptor 29 through the fixed slit 29a. The second LED (not shown) and the second phototransistor 30b are arranged so as to face the photo interruptor 29 through the fixed slit 29b. The fixed slits 29a and 29b are arranged so as to face the slits 28a and 28b of the slit plate 28.

In the above construction, the optical card C starts rotating. When the spindle motor 31 rotates, 360 pulses are output per revolution from the first phototransistor 30a and one pulse is output per revolution from the second phototransistor 30b by the light fluxes which passed through the slit plate 28.

Fig. 8 shows the output pulses VP₁ and VP₂ of the first and second phototransistors 30a and 30b of the photo interruptor 29. When n pulses VP₁ are output from the start time point of the rotation, the optical card C has rotated n degrees until the time point of the generation of the n-th pulse. Therefore, m = 360 - n indicates an angle for the period of time after the generation of the pulse VP₂ until the direction of the card again coincides with the direction at the start time point of the rotation. The control unit (not shown) stores the value of m and shuts off the power supply of the spindle motor 31 and reduces the speed at the stop of the revolution. When m pulses VP₁ are counted after the pulse VP₂ was output, the control unit transmits a brake command, thereby enabling the ejecting direction of the optical card C to be correctly adjusted. In this manner, the optical card C can be also stopped in the correct direction by the control unit to control the spindle motor in correspondence to the signal from the encoder.

Figs. 10 to 13 show the fourth embodiment. Fig. 10 shows a mechanism to adjust the ejecting direction of the optical card C. In Fig. 10, the spindle motor 31 to rotate the optical card C is connected to a control unit 33 through a motor driver 32 and is driven and stopped by a command from the control unit 33. On the other hand, a rotary encoder comprising a slit plate 34 and a photo interruptor 35 is attached to the spindle motor 31. Pulses of the frequency which is proportional to the rotating speed of the slit plate 34 are obtained from the photo interruptor 35 and transmitted to the control unit 33. On the other hand, two photosensors 36 and 37 of the light reflection type are arranged below the rotating optical card C. Outputs of the photosensors 36 and 37 are input to the control unit 33.

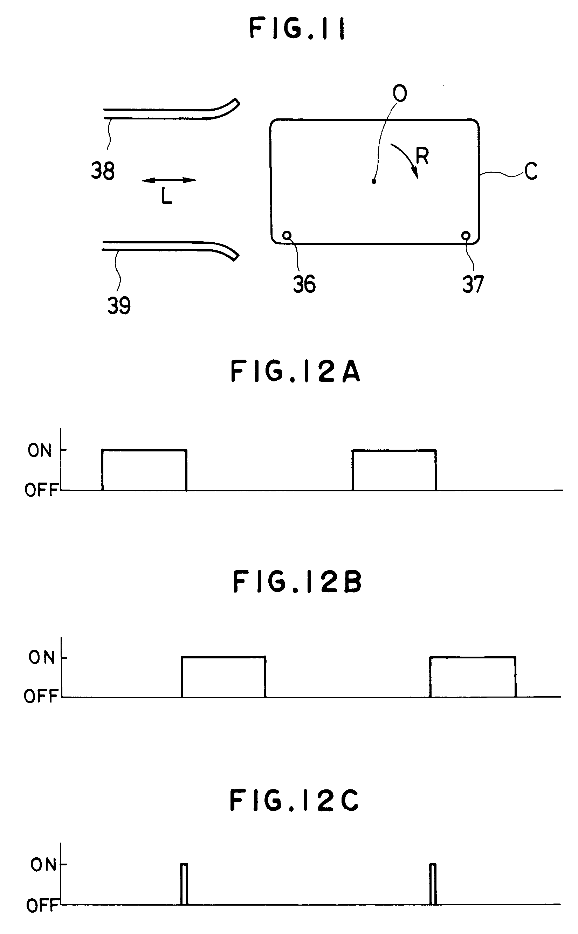

Fig. 11 is a plan view showing an arranging positions of the photosensors 36 and 37. The photosensors 36 and 37 are arranged so as to detect two adjacent edge portions of the optical card C when the rotating direction of the optical card C coincides with an ejecting direction L along guide rails 38 and 39.

Fig. 12A shows a signal from the photosensor 36. Fig. 12B shows a signal from the photosensor 37. The signals of the photosensors 36 and 37 are set to the high level only for the period of time when the optical card C traverses over the sensors 36 and 37. Fig. 12C shows a signal indicative of the AND of the signals of Figs. 12A and 12B. Therefore, when the AND signal of Fig. 12C is at the high level, the direction of the optical card C coincides with the ejecting direction L as shown in Fig. 11.

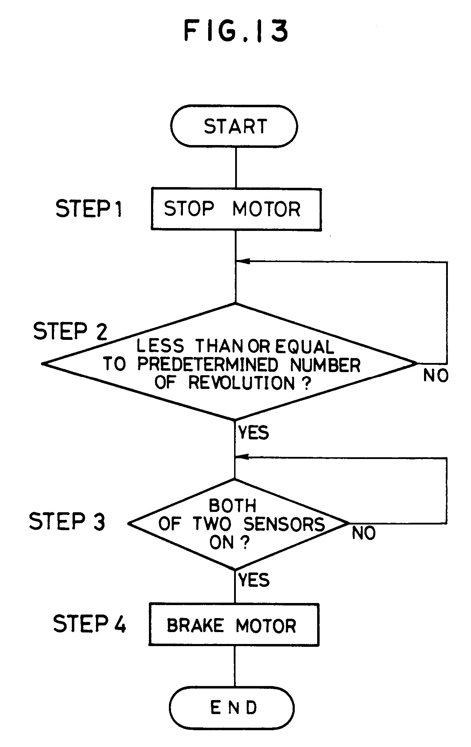

Fig. 13 is a flowchart showing a procedure to align the rotation stopping direction of the optical card C. In step 1, the power supply to the spindle motor 31 is stopped. In step 2, a check is made to see if the speed of revolution of the spindle motor 31 is less than or equal to a predetermined speed of revolution or not. Only when it is less than or equal to the predetermined speed of revolution, step 3 follows. Only when both of the signals of the photo-sensors 36 and 37 are at the high level in step 3, step 4 follows. In step 4, a brake signal is transmitted to the motor driver 32 and the processing routine is finished.

In the above construction, when the control unit 33 disconnects the power supply of the spindle motor 31, the rotating speed of the spindle motor 31 gradually decreases while continuing the rotation due to the inertia of the spindle motor. A change in rotating speed is sequentially transmitted to the control unit 33 through the photo interruptor 35. When it is confirmed that the rotating speed is equal to or less than the predetermined rotating speed, the AND signal of the output signals of the photosensors 36 and 37 is set to the high level and, at the same time, a brake command is output to stop the rotation of the spindle motor. In this case, by setting the predetermined rotating speed of the spindle motor 31 to a low value such that the spindle motor 31 can be immediately stopped in response to the brake command and, further, by properly selecting the sensing positions, the angle between the stopping direction of the optical card C and the ejecting direction L can be adjusted to a value within a range of about ±2°. Therefore, as shown in Fig. 11, by slightly widening the edge portions of the guide rails 38 and 39, the optical card C can be certainly ejected out. On the other hand, in the fourth embodiment, since the photosensors 36 and 37 are provided, the presence or absence of the optical card C can be also detected from an output signal upon rotation of the spindle motor 31.

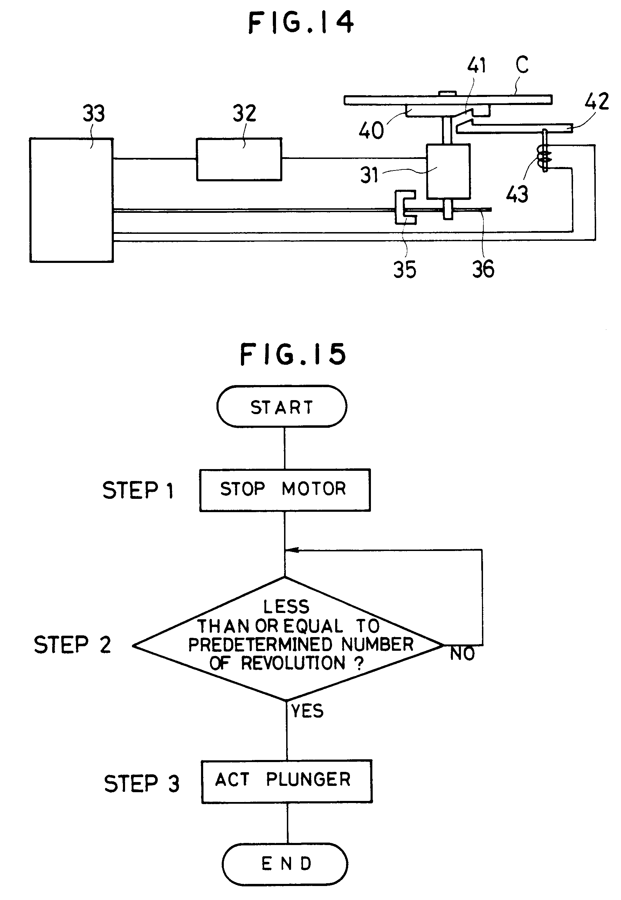

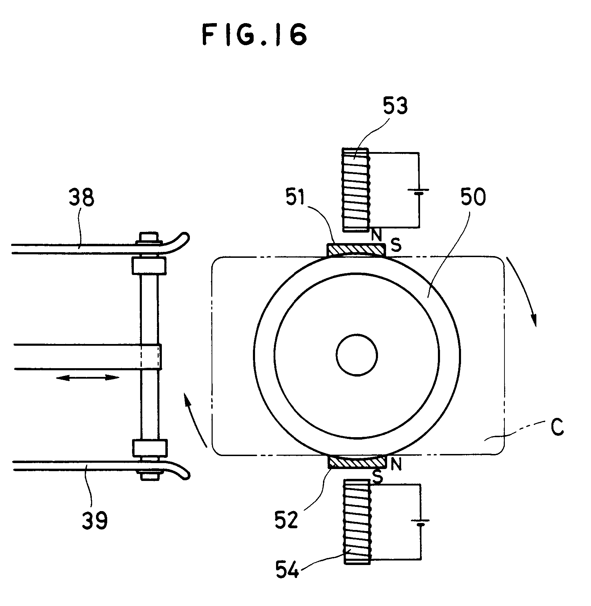

Figs. 14 and 15 show the fifth embodiment. A notched portion 41 is formed at a predetermined position on the lower surface of a turntable 40 onto which the optical card C is put. A stopper 42 having a tip edge portion adapted to be fitted into the notched portion 41 is arranged below the turntable 40. The stopper 42 is vertically driven by a plunger 43 which is made operative by the control unit 33.

Fig. 15 is a flowchart showing a procedure to align the rotation stopping direction. In step 1, the power supply of the spindle motor 31 is disconnected. Only when the speed of revolution of the spindle motor 31 is equal to or less than a predetermined speed of revolution in step 2, step 3 follows. In step 3, the plunger 43 is made operative.

In the above construction, in a manner similar to the foregoing embodiments, the control unit 33 waits until the speed of revolution of the spindle motor 31 is equal to or less than the predetermined speed of revolution. Next, the plunger 43 is made operative to upwardly move the stopper 42 in the direction which is parallel with the rotating shaft of the spindle motor 31. Then, the rotation of the spindle motor is stopped at the position where the stopper 42 is fitted into the notched portion 41. Due to the stop of the rotation, the turntable 40 is set to a predetermined direction, that is, the longitudinal direction of the optical card C coincides with the direction of the guide rails 38 and 39. In this case, since the tip edge portion of the stopper 42 is come into slide contact with the lower surface of the turntable 40 until it is fitted into the notched portion 41, it is necessary to set the predetermined speed of revolution to a slightly high value to thereby prevent that the rotation of the spindle motor is stopped during the slide contact motion by the friction between the lower surface of the turntable 40 and the tip edge portion of the stopper 42. When the rotation of the spindle motor 31 is restarted, the plunger 43 is made inoperative to release the stopper 42. In the embodiment, the notched portion 41 has been formed on the lower surface of the turntable 40. However, it is also possible to form the notched portion on the side surface of the turntable 40 and to drive the stopper 42 in the horizontal direction. With such a structure, there is no need to provide the sensor to detect the rotating position of the optical card C.

Fig. 16 shows the sixth embodiment. Magnets 51 and 52 as magnetic flux generating means are arranged so as to face each other in the outer peripheral portion of a turntable 50. Magnetic poles of the magnets 51 and 52 are arranged so that the S and N poles are directed to the outsides. On the other hand, electromagnets 53 and 54 to form magnetic fields by generating magnetic fluxes by current flowing through their coils are fixed to the main body base plate of the apparatus at positions where the turntable 50 is sandwiched on the straight line which is perpendicular to the rotating shaft of the turntable 50 and to the ejecting direction L of the optical card C. The magnetic poles of the electromagnets 53 and 54 are arranged so that the N and S poles are directed to the insides.

In the above construction, when the rotation of the turntable 50 is stopped, the power supply of the spindle motor to rotate the turntable 50 is disconnected and currents are supplied to the electromagnets 53 and 54. Thus, when the magnets 51 and 52 reach the positions where they face the electromagnets 53 and 54, respectively, magnetic attractive forces are generated, so that the rotation of the turntable 50 is stopped. By using the magnetic attractive forces as mentioned above, the rotation of the turntable can be stopped without coming into contact with the turntable. Therefore, the turntable and the like are not damaged and it is also unnecessary to provide the sensor to detect the rotating position of the optical card C.

Although the above embodiments have been described with respect to the example in which the information recording medium having a rectangular shape other than a circular shape is used, the shape of the information recording medium is not particularly limited. The invention can be also applied to other information recording media having any shapes such as circular shape, square shape, and the like if they are the information recording media such that the ejecting direction and the inserting direction of the information recording medium need to be coincident or such that when the information recording medium is ejected out, the direction of the medium needs to be aligned to a predetermined direction.

Although the above embodiments have been described with respect to the example in which the sensor provided near the turntable in order to detect the direction of the information recording medium, the encoder attached to the spindle motor, and the like are used, it is sufficient that the direction of the information recording medium can be indirectly known. Therefore, the direction of holding means for holding the information recording medium may be also detected in place of the direction of the medium.

As described above, according to the information recording and/or reproducing apparatus of the present invention, in spite of the fact that it has the mechanism to rotate the information recording medium and to read out the information therefrom, the ejecting direction of the information recording medium can be made coincident with the inserting direction. Therefore, the apparatus can be easily handled. A danger such that the recording medium is damaged can be prevented. The reliability of the automatic ejecting function can be raised.

## Claims

1. An information recording apparatus comprising:
a head (11) for effecting recording of information on a non-circular card-like information recording medium (C);
holding means (23) for holding the recording medium;
driving means for rotating the holding means so that recording of information can be effected on the recording medium by said head;
detecting means (27) for detecting an angular position of the recording medium or said holding means; and
control means (33) for controlling said driving means in correspondence to an output from said detecting means so as to adjust the angular position of said holding means to align the longitudinal direction of the recording medium with a discharge direction when the recording medium is to be ejected from the apparatus.

2. An information reproducing apparatus comprising:
a head (11) for effecting reproduction of information from a non-circular card-like information recording medium (C);
holding means (23) for holding the recording medium;
driving means for rotating the holding means so that reproduction of information can be effected from the recording medium by said head;
detecting means (27) for detecting an angular position of the recording medium or said holding means; and
control means (33) for controlling said driving means in correspondence to an output from said detecting means so as to adjust the angular position of said holding means to align the longitudinal direction of the recording medium with a discharge direction when the recording medium is to be ejected from the apparatus.

3. An information recording-reproducing apparatus comprising a head (11) for effecting recording and/or reproduction of information on/from a non-circular card-like information recording medium (C), holding means (23) for holding the recording medium, driving means for rotating the holding means so that recording and/or reproduction of information can be effected on/from the recording medium by said head, detecting means (27) for detecting an angular position of the recording medium or said holding means, and control means (33) for controlling said driving means in correspondence to an output from said detecting means so as to adjust the angular position of said holding means to align the longitudinal direction of the recording medium with a discharge direction when the recording medium is to be ejected from the apparatus.

4. Apparatus as claimed in any one of claims 1 to 3 wherein the detecting means comprise at least one photosensitive element.

5. Apparatus as claimed in claim 4 wherein the detecting means comprise a pair of photodetectors (30A,30B) mounted to cooperate with said holding means in such a manner as to give output signals which respectively give. a relatively fine indication of the angular position of said holding means, and an indication of each complete revolution of said holding means.

6. Apparatus as claimed in claim 5 wherein each photodetector is associated with an LED and said holding means is provided with a plurality of apertures which during rotation of the holding means pass between a pair of said photodetectors and LED's so as to generate said fine indication signal.

7. Apparatus as claimed in claim 6 wherein said holding means is provided with a single aperture arranged during rotation of said holding means to pass between the other pair of said LED's and photodetectors so as to give an output signal at each rotation of said holding means.

8. A method of recording and/or reproducing information on/from a non-circular card-like information recording medium in which the recording medium is held in holding means and rotated by driving means, recording of and/or reproduction of information being effected on/from the recording medium using a head whilst the recording medium is being rotated, said method further comprising the steps of detecting an angular position of the recording medium or the holding means, adjusting the angular position of the holding means by controlling said driving means on the basis of the detected angular position so that the longitudinal direction of the recording medium is aligned with a discharge direction, and discharging the recording medium from the apparatus.

## Patentansprüche

1. Informations-Aufzeichnungsvorrichtung mit
einem Kopf (11) zum Ausführen einer Aufzeichnung von Informationen auf einem nicht kreisförmigen kartenähnlichen Informations-Aufzeichnungsmedium (C),
einer Haltevorrichtung (23) zum Halten des Aufzeichnungsmediums,
einer Antriebsvorrichtung zum Drehen der Haltevorrichtung derart, daß die Aufzeichnung von Informationen auf dem Aufzeichnungsmedium durch den Kopf ausgeführt werden kann,
einer Erfassungseinrichtung (27) zum Erfassen einer Winkelstellung des Aufzeichnungsmediums oder der Haltevorrichtung und
einer Steuereinrichtung (33) zum Steuern der Antriebsvorrichtung entsprechend einem Ausgangssignal aus der Erfassungseinrichtung zum Einstellen der Winkelstellung der Haltevorrichtung, damit die Längsrichtung des Aufzeichnungsmediums auf eine Ausstoßrichtung ausgerichtet wird, wenn das Aufzeichnungsmedium aus der Vorrichtung ausgestoßen wird.

2. Informations-Wiedergabevorrichtung mit
einem Kopf (11) zum Ausführen einer Wiedergabe von Informationen von einem nicht kreisförmigen kartenähnlichen Informations-Aufzeichnungsmedium (C),
einer Haltevorrichtung (23) zum Halten des Aufzeichnungsmediums,
einer Antriebsvorrichtung zum Drehen der Haltevorrichtung derart, daß die Wiedergabe von Informationen von dem Aufzeichnungsmedium durch den Kopf ausgeführt werden kann,
einer Erfassungseinrichtung (27) zum Erfassen einer Winkelstellung des Aufzeichnungsmediums oder der Haltevorrichtung und
einer Steuereinrichtung (33) zum Steuern der Antriebsvorrichtung entsprechend einem Ausgangssignal aus der Erfassungseinrichtung zum Einstellen der Winkelstellung der Haltevorrichtung, damit die Längsrichtung des Aufzeichnungsmediums auf eine Ausstoßrichtung ausgerichtet wird, wenn das Aufzeichnungsmedium aus der Vorrichtung ausgestoßen wird.

3. Informations-Aufzeichnungs-/Wiedergabevorrichtung mit
einem Kopf (11) zum Ausführen einer Aufzeichnung und/oder Wiedergabe von Informationen auf/von einem nicht kreisförmigen kartenähnlichen Informations-Aufzeichnungsmedium (C),
einer Haltevorrichtung (23) zum Halten des Aufzeichnungsmediums,
einer Antriebsvorrichtung zum Drehen der Haltevorrichtung derart, daß die Aufzeichnung und/oder Wiedergabe von Informationen auf/von dem Aufzeichnungsmedium durch den Kopf ausgeführt werden kann,
einer Erfassungseinrichtung (27) zum Erfassen einer Winkelstellung des Aufzeichnungsmediums oder der Haltevorrichtung und
einer Steuereinrichtung (33) zum Steuern der Antriebsvorrichtung entsprechend einem Ausgangssignal aus der Erfassungseinrichtung zum Einstellen der Winkelstellung der Haltevorrichtung, damit die Längsrichtung des Aufzeichnungsmediums auf eine Ausstoßrichtung ausgerichtet wird, wenn das Aufzeichnungsmedium aus der Vorrichtung ausgestoßen wird.

4. Vorrichtung nach einem der Ansprüche 1 bis 3, wobei die Erfassungseinrichtung zumindest ein lichtempfindliches Element aufweist.

5. Vorrichtung nach Anspruch 4, wobei die Erfassungseinrichtung ein Paar Fotodetektoren (30A, 30B) aufweist, die zum Zusammenwirken mit der Haltevorrichtung auf eine solche Weise befestigt sind, daß sie Ausgangssignale ausgeben, die jeweils die Winkelstellung der Haltevorrichtung relativ genau und jede vollständige Umdrehung der Haltevorrichtung anzeigen.

6. Vorrichtung nach Anspruch 5, wobei jeder Fotodetektor einer Leuchtdiode zugeordnet ist und die Haltevorrichtung mit einer Vielzahl von Öffnungen versehen ist, die sich während der Drehung der Haltevorrichtung derart zwischen einem Paar der Fotodetektoren und der Leuchtdioden bewegen, daß sie das genaue Anzeigesignal erzeugen.

7. Vorrichtung nach Anspruch 6, wobei die Haltevorrichtung mit einer einzelnen Öffnung versehen ist, die sich während der Drehung der Haltevorrichtung derart zwischen dem anderen Paar der Leuchtdioden und der Fotodetektoren bewegt, daß sie bei jeder Drehung der Haltevorrichtung ein Ausgangssignal ausgibt.

8. Verfahren zum Aufzeichnen und/oder Wiedergeben von Informationen auf/von einem nicht kreisförmigen kartenähnlichen Informations-Aufzeichnungsmedium, bei dem das Aufzeichnungsmedium in einer Haltevorrichtung gehalten und durch eine Antriebsvorrichtung gedreht wird, eine Aufzeichnung und/oder eine Wiedergabe von Informationen auf/von dem Aufzeichnungsmedium unter Verwendung eines Kopfes durchgeführt wird, während das Aufzeichnungsmedium gedreht wird, wobei das Verfahren außerdem die Schritte eines Erfassens einer Winkelstellung des Aufzeichnungsmediums oder der Haltevorrichtung, eines Ausrichtens der Winkelstellung der Haltevorrichtung durch Steuern der Antriebsvorrichtung auf Grundlage der erfaßten Winkelstellung derart, daß die Längsrichtung des Aufzeichnungsmediums auf eine Ausstoßrichtung ausgerichtet wird, und eines Ausstoßens des Aufzeichnungsmediums aus der Vorrichtung aufweist.

## Revendications

1. Appareil d'enregistrement d'informations comportant :
une tête (11) destinée à effectuer un enregistrement d'informations sur un support (C) d'enregistrement d'informations, analogue à une carte non circulaire ;
des moyens de maintien (23) destinés à maintenir le support d'enregistrement ;
des moyens d'entraînement destinés à faire tourner les moyens de maintien afin qu'un enregistrement d'informations puisse être effectué par ladite tête sur le support d'enregistrement ;
des moyens de détection (27) destinés à détecter la position angulaire du support d'enregistrement ou desdits moyens de maintien ; et
des moyens de commande (33) destinés à commander lesdits moyens d'entraînement en correspondance avec un signal de sortie desdits moyens de détection afin de régler la position angulaire desdits moyens de maintien pour aligner la direction longitudinale du support d'enregistrement avec une direction de décharge lorsque le support d'enregistrement doit être éjecté de l'appareil.

2. Appareil de reproduction d'informations, comportant :
une tête (11) destinée à effectuer une reproduction d'informations à partir d'un support (C) d'enregistrement d'informations analogue à une carte non circulaire ;
des moyens de maintien (23) destinés à maintenir le support d'enregistrement ;
des moyens d'entraînement destinés à faire tourner les moyens de maintien afin qu'une reproduction d'informations puisse être effectuée par ladite tête à partir du support d'enregistrement ;
des moyens de détection (27) destinés à détecter une position angulaire du support d'enregistrement ou desdits moyens de maintien ; et
des moyens de commande (33) destinés à commander lesdits moyens d'entraînement en correspondance avec un signal de sortie desdits moyens de détection afin de régler la position angulaire desdits moyens de maintien pour aligner la direction longitudinale du support d'enregistrement avec une direction de décharge lorsque le support d'enregistrement doit être éjecté de l'appareil.

3. Appareil d'enregistrement-reproduction d'informations comportant une tête (11) destinée à effectuer un enregistrement et/ou une reproduction d'informations sur/à partir d'un support (C) d'enregistrement d'informations analogue à une carte non circulaire, des moyens de maintien (23) destinés à maintenir le support d'enregistrement, des moyens d'entraînement destinés à faire tourner les moyens de maintien afin qu'un enregistrement et/ou une reproduction d'informations puissent être effectués par ladite tête sur/à partir du support d'enregistrement, des moyens de détection (27) destinés à détecter une position angulaire du support d'enregistrement ou desdits moyens de maintien, et des moyens (33) de commande destinés à commander lesdits moyens d'entraînement en correspondance avec un signal de sortie desdits moyens de détection afin de régler la position angulaire desdits moyens de maintien pour aligner la direction longitudinale du support d'enregistrement avec une direction de décharge lorsque le support d'enregistrement doit être éjecté de l'appareil.

4. Appareil selon l'une quelconque des revendications 1 à 3, dans lequel les moyens de détection comprennent au moins un élément photosensible.

5. Appareil selon la revendication 4, dans lequel les moyens de détection comprennent deux photodétecteurs (30A, 30B) montés de façon à coopérer avec lesdits moyens de maintien de manière à produire des signaux de sortie qui donnent, respectivement, une indication relativement fine de la position angulaire desdits moyens de maintien, et une indication de chaque tour complet desdits moyens de maintien.

6. Appareil selon la revendication 5, dans lequel chaque photodétecteur est associé à une DEL et lesdits moyens de maintien sont pourvus de plusieurs ouvertures qui, durant une rotation des moyens de maintien, passent entre une paire desdits photodétecteurs et desdites DEL afin de générer ledit signal d'indication fine.

7. Appareil selon la revendication 6, dans lequel lesdits moyens de maintien sont pourvus d'une seule ouverture disposée de façon à passer, pendant une rotation desdits moyens de maintien, entre l'autre paire desdites DEL et desdits photodétecteurs afin de donner un signal de sortie à chaque tour desdits moyens de maintien.

8. Procédé d'enregistrement et/ou reproduction d'informations sur/à partir d'un support d'enregistrement d'informations analogue à une carte non circulaire, dans lequel le support d'enregistrement est maintenu dans des moyens de maintien et est mis en rotation par des moyens d'entraînement, un enregistrement et/ou une reproduction d'informations étant effectués sur/à partir du support d'enregistrement en utilisant une tête, tandis que le support d'enregistrement est en rotation, ledit procédé comprenant en outre les étapes qui consistent à détecter une position angulaire du support d'enregistrement ou des moyens de maintien, à régler la position angulaire des moyens de maintien en commandant lesdits moyens d'entraînement sur la base de la position angulaire détectée afin que la direction longitudinale du support d'enregistrement soit alignée avec une direction de décharge, et à décharger le support d'enregistrement de l'appareil.
